# EUROPEAN PATENT SPECIFICATION

(11) **EP 1 911 663 B1**
(45) Date of publication and mention of the grant of the patent: **26.10.2011**
(21) Application number: 07118210.9
(22) Date of filing: 10.10.2007
(51) Int. Cl.: B62D 27/02, B62D 33/06, B62D 65/02, B62D 23/00

(54) **Box-type structure for the cab of a truck and method of production**
Kastenartige Struktur für ein Lastwagenführerhaus und entsprechendes Herstellungsverfahren
Structure de type boîte pour cabine de camion et procédé de fabrication correspondant

(30) Priority: 11.10.2006 IT MI20061948
(43) Date of publication of application: 16.04.2008
(73) Proprietor: IVECO S.p.A., 10156 Torino (IT)
(72) Inventor: Giovine, Mauro, 10090 Castiglione Torinese (IT)
(74) Representative: Borsano, Corrado

(56) References cited:
- WO-A-2005/021361
- DE-A1- 3 811 427
- FR-A- 2 872 123
- GB-A- 2 281 047
- US-A1- 2005 082 879

## Description

### FIELD OF THE INVENTION

The present invention relates to a box-type structure for the production of body structures for vehicles, motor cars, trucks, vans, etc., referred to in the following description as a structure for vehicle cab and the relative method of producing said structure.

### PRIOR ART

Vehicle bodies, for example truck cabs, normally comprise box-type sections which are part of the structure of the walls, floor and roof. Said box-type sections arranged for example on the corners of the structure and in particular on the corners joining the roof to the walls, are joined to the metal plates, or are partially formed by the metal plates that constitute said walls and roof and provide the required strength. These box-type structures are substantially tubiform structures with a square or rectangular cross-section and they intersect with one another in a series of knots. For example the roof generally comprises a front cross member arranged above the windscreen, joined at the ends to two longitudinal box-type structures, and two upright members. The ends of the cross member may be curved so as to meet the ends of the longitudinal box-type structures leaving the knot, forming a rounded corner. This is especially the case of the front cross member, while as a general rule the rear cross member is arranged so as to be substantially perpendicular in relation to the longitudinal box-type structures. The metal plates which form the walls and roof are joined to the box-type structures in different ways, and other intermediate box-type structures are attached to said metal plates to provide reinforcement. The joint between the box-type structures in correspondence with the knots is often achieved by welding, usually spot welding on flaps arranged transversely to said box-type structures, sometimes projecting towards the outside of said box-type structures and joining elements are needed between the knot and box-type structure. Some of these elements generally consist of separators arranged between a box-type structure and the knot or between different portions of the box-type structure.

The methods used to achieve the joints on the knots are very complex and require a number of welding operations between different parts. Furthermore the flexural strength and resistance to torsional stress of the box-type structures on said joints are not ideal; this is made worse by the fact that, in case of projecting flaps, given the dimensions of the equipment that is used, spot welding is often performed at a certain distance from the walls of the box-type structure, which means that due to the arm formed by the wing the welded joint is exposed to considerable torsional stress and bending or tractive force. Finally, to enable access by spot welding equipment, many holes must be made in the side walls and these must then be reclosed.

The patent GB2001915 shows a box-type structures which features are described in the preamble of claim 1.

### SUMMARY

The problems described above have now been solved according to the present invention with a box-type system for a vehicle body, according to claim 1.

The joint, and this applies throughout this description unless otherwise specified, may be achieved using any method known in the prior art, such as welding, preferably spot welding, or brazing, braze welding or glueing.

The various parts are preferably joined together by means of welding which is always performed on the junction plane of said parts without the need for fringing/bending, joining flaps.

Said longitudinal walls are joined together along the longitudinal edges, for example by means of overlapping longitudinal flaps. The first box-type member may be straight in the longitudinal direction, or curved, and thus also the two longitudinal walls.

Preferably the first member is joined to the second member, as illustrated, at one end, and at the other to another member, to create a structure that may be symmetrical.

According to one embodiment of the invention, the first member may be a cross member of the structure of the cab of a vehicle, and may be for example the top front cross member, above the windscreen, or the top rear cross member, with the second and other longitudinal box-type members arranged between the walls and the roof.

The invention also relates to a method of producing a box-type system comprising the following steps:
overlapping and joining of one end of a first longitudinal wall and an end portion of a second box-type member;
overlapping and joining of one end of a second longitudinal wall and a second end portion of the second box-type member, so as to form a first box-type member defined by said first and second longitudinal walls;
optionally of joining said first and second longitudinal walls together along the longitudinal edges.

It is particular object of the present invention the content of the appended claims.

### LIST OF DRAWINGS

The present invention will now be illustrated by means of the following detailed description of preferred, but not exclusive embodiments, provided merely by way of example, with the help of the drawings attached hereto, in which:
figures 1 to 3 are schematic diagrams of a perspective view of various steps in the assembly of a top front cross member of a truck cab, which is part of a system according to the present invention;
figure 4 is a schematic diagram of a top sectional view of a part of the cross member in the previous drawings joined according to the present invention to a second box-type member;
figures 5 to 7 are schematic diagrams of a perspective view of various steps in the assembly of a top rear cross member of a truck cab, which is part of a system according to the present invention;
figure 8 is a schematic diagram of a top sectional view of a part of the cross member of the previous drawings joined to a second box-type member;
figure 9 is a schematic diagram of a top sectional view of a part of a top rear cross member assembled according to the prior art.

### DETAILED DESCRIPTION OF A PREFERRED EMBODIMENT

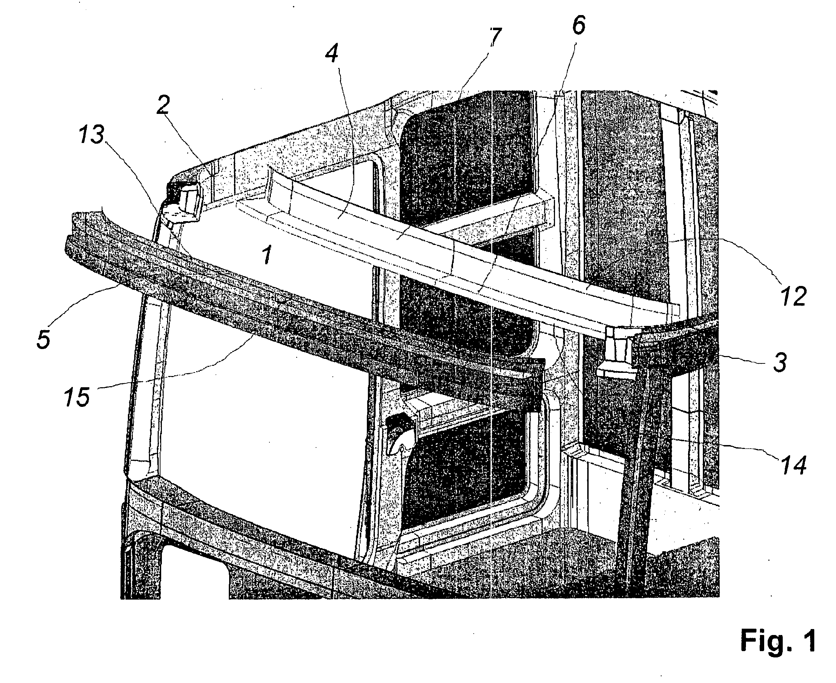

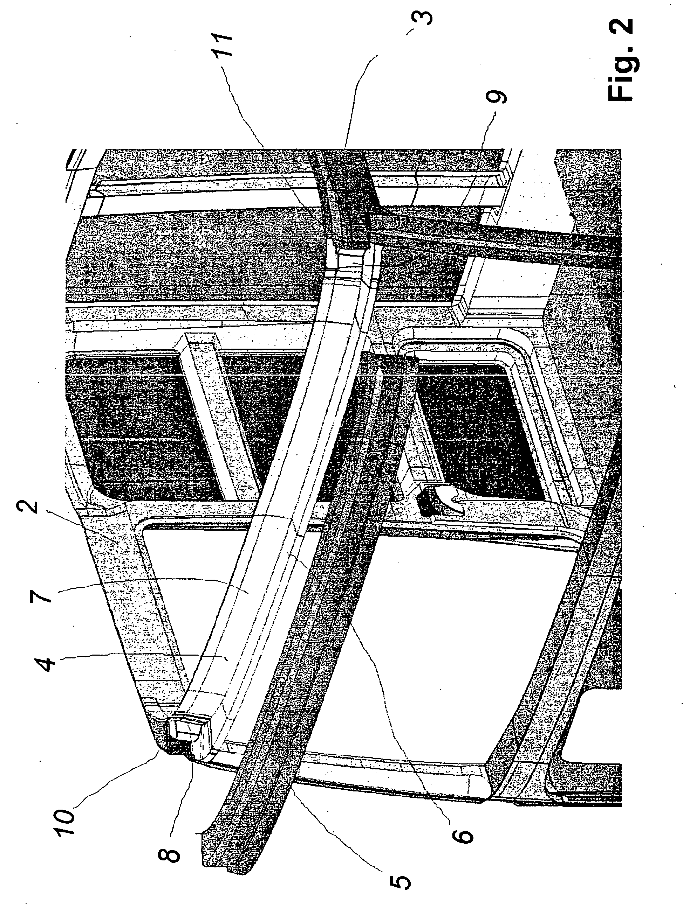

With reference to figures 1, 2 and 3, a box-type system is described, said system comprising the top front cross member of the cab of a truck and the relative steps in the assembly thereof; the cross member 1 constitutes the first box-type member as described above, the longitudinal box-type systems 2 and 3 constitute the second and other box-type members. The front cross member comprises the longitudinal walls 4 and 5, which, in this case, have a substantially L-shaped cross-section, formed for example in the case of the longitudinal wall 4 by the flaps 6 and 7. With reference to figure 2, the first longitudinal wall 4 is arranged with the ends overlapping the end portions 8 and 9 of the box-type members 2 and 3 respectively, and joined thereto in a way that is known, preferably by means of spot welding. It may be sufficient to weld just one of the flaps, for example the wing 6, or weld spots may also be performed on the wing 7 in the overlapping area.

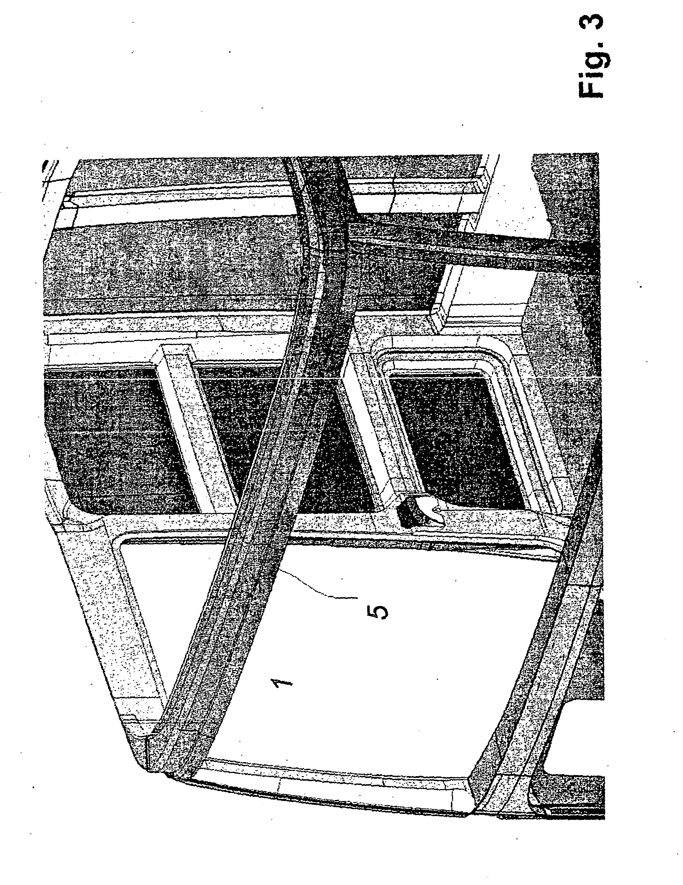

Figures 2 and 3 illustrate the assembly of the second longitudinal wall 5 the ends of which are made to overlap and are joined to the end portions 10 and 11 of the longitudinal members.

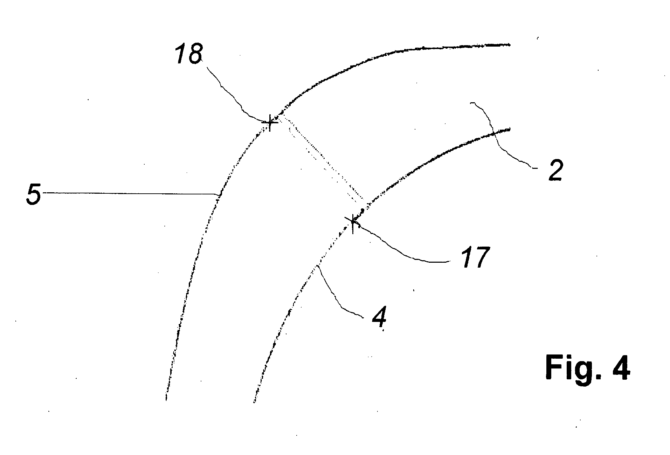

According to a preferred embodiment the first and second longitudinal walls are joined together along the edges, for example the longitudinal flaps 12 and 13 and 14 and 15. Figure 4 shows a cross-sectional plan view of the area of the joint between the first and second members. The crosses 17 and 18 indicate the welding areas according to a possible embodiment of the invention.

The end portions of the second (and of the other) box-type member may be the walls of the box-type system, or specific flaps, of a shape corresponding to that of the ends of the longitudinal walls of the first member, also depending on the angle that is formed between the box-type members on the joint. For example, in the case in figures 1 to 4, the curve of the front cross member joins that of the longitudinal box-type members, without forming sharp corners. The other box-type systems can also be formed as described, i.e. by first and second longitudinal walls joined as described above, and joined at the ends to a box-type member, which may be a knot or a joining element, or to the first box-type member.

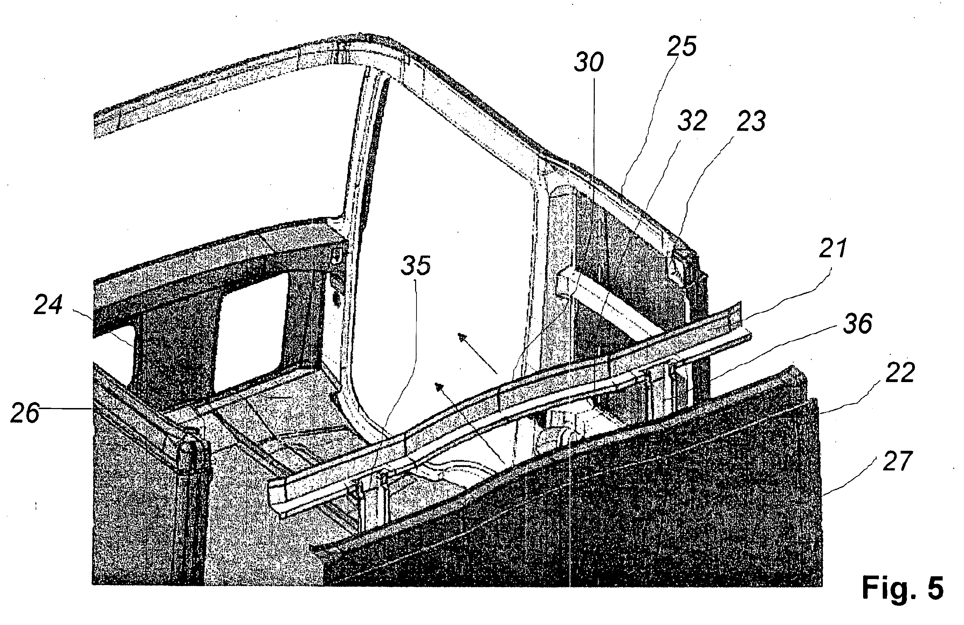

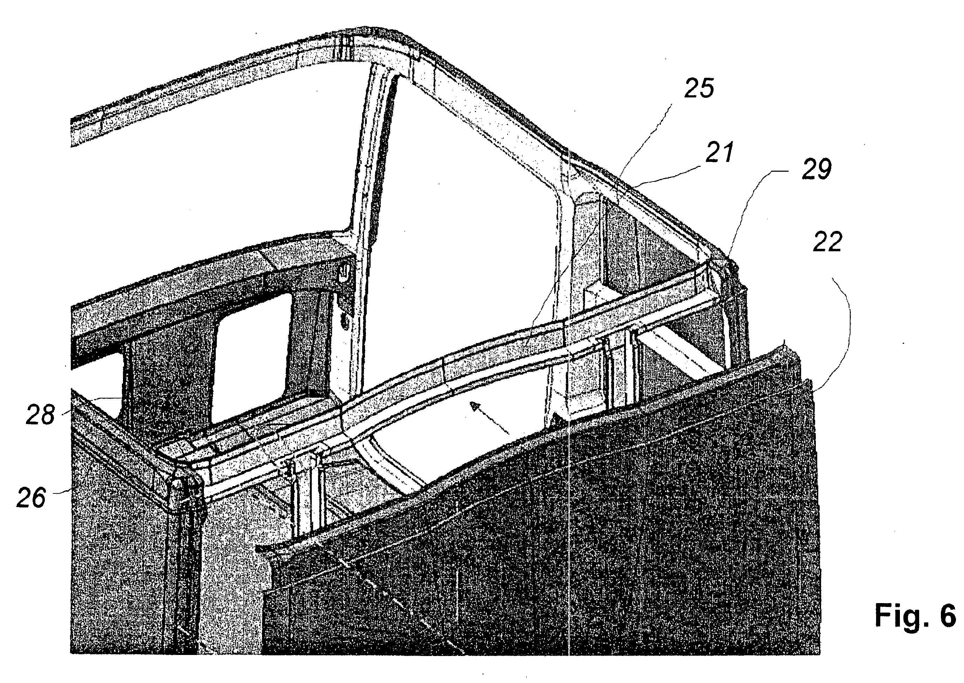

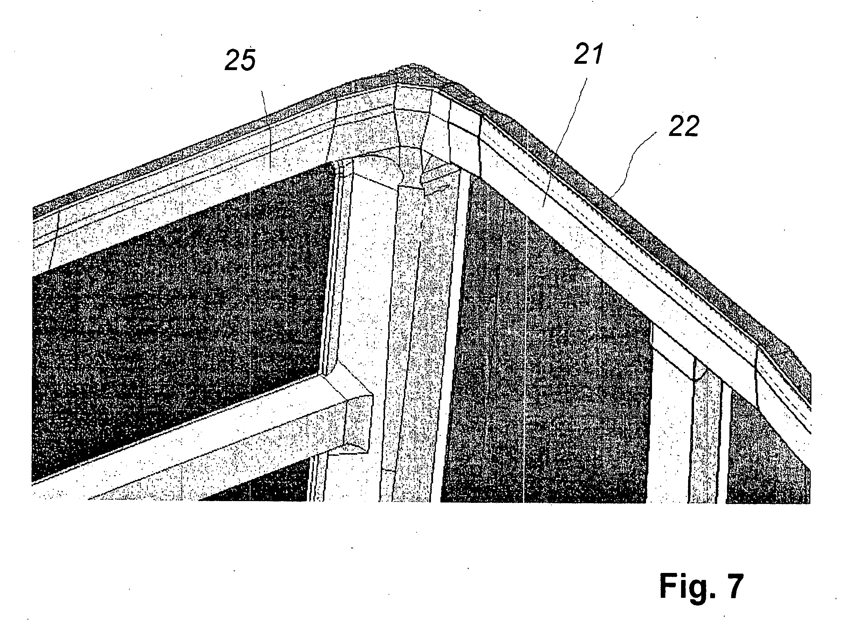

Figures 5 - 8 illustrate the joint of a top rear cross member of the cab of a truck. Once again a first longitudinal wall 21 is joined to the end portions 23 and 24 of other box-type members, the longitudinal box-type members 25 and 26. The second wall 22 is part of a metal plate 27 that constitutes one of the walls of the cab and is joined to the end portions 28 and 29 of the box-type members 25 and 26.

The fact that one of the longitudinal walls is part of a larger metal plate, constituting part of a wall of the cab that is not a part of the box-type system, is a particular embodiment of the invention. The walls of the box-type systems may be obtained for example by forming. Also in this case the joint can be performed along the longitudinal edges, for example by means of the flaps 30 with 31 and 32 with the actual wall 27, which also acts as a wing in this case. Other members may be attached to the longitudinal walls, in order to form other box-type sections or reinforcements. For example U-shaped members 35 and 36 are attached to the wall 21, in which a specific seat is provided, as shown in one wing of the longitudinal wall 21. These may form, with the wall 27, vertical reinforcement box-type systems.
it must be noted how the first longitudinal wall can be joined to the end portions of the second (and other) member by placing it against the latter from what will be the inside (example in figures 5-8) of the first member, or from the outside (example in figures 1-4), and can be joined to the end portions of the other members from its external or internal face respectively. The second longitudinal wall is preferably placed from the outside. Depending on the specific choices and requirements, the overall dimensions of the end portions must be taken into account in order to facilitate positioning.

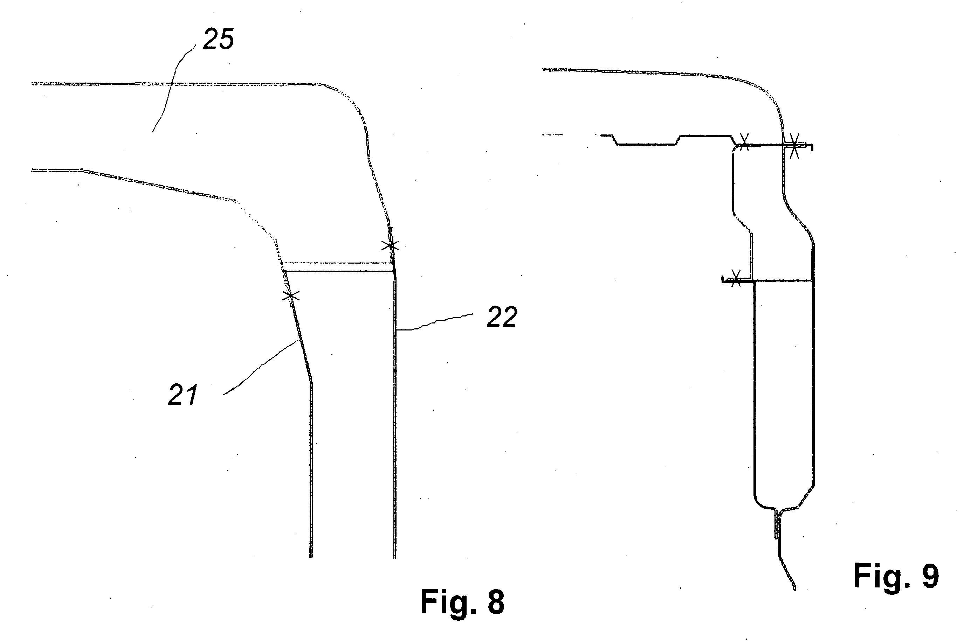

Figures 8 and 9 (the crosses indicate possible weld spots) illustrate the extreme simplicity of the joint obtained according to the present invention compared to the prior art. Note how the continuity between the box-type systems is assured and the absence of any diaphragms or projecting flaps. With the system according to the present invention the parts are joined together more simply and faster, and fewer formed parts are needed. No jointed parts are required and parts can be set in place with less precision without causing any inconvenience. Fewer holes are also required for the electrodes in the case of spot welding (one for each joint between box-type systems). The absence of welds on external flaps or diaphragms perpendicular to the walls is advantageous in terms of mechanical strength. The weld spots (or glue points) in the system according to the present invention are able to withstand shearing stress. The result is a considerable increase in the mechanical strength of the box-type system in terms of bending and particularly torsional stress.

## Claims

1. Box-type system for vehicle body, said box-type system comprising:
a first box-type member (1) comprising two longitudinal walls (4, 5, 21, 22) having a cross-section that forms a bend or a curve essentially L-shaped, wherein the concave part of the cross-section of each of the longitudinal walls is arranged so as to face the other longitudinal wall ;
a second box-type member joined to each of said walls by means of the partial overlapping of an end portion thereof (8, 9, 10, 11, 23, 24) and one end of said wall,
**characterized in that** said first box-type member (1) defines a top front cross member or a rear top rear cross member of the vehicle body and said second box-type member (2, 3, 23, 24) is arranged between the walls and the roof of the vehicle body and **in that** said first box-type member (1) is curved so as it joins said second box-type member without forming sharp corners.

2. System according to claim 1, **characterized in that** said overlapping zone is tangential to the curve of said first box-type member (1) according to a cross-sectional plan view of the joint between the first and second members.

3. System according to any of the previous claims, **characterized in that** the joint is achieved by welding, brazing, braze welding or gluing.

4. System according to claim 3, **characterized in that** the joint is achieved by spot welding.

5. System according to any of the previous claims, **characterized in that** said longitudinal walls are joined together along the longitudinal edges, preferably by means of overlapping longitudinal flaps (12, 14, 13, 15, 30, 31, 32, 27).

6. System according to any of the previous claims, **characterized in that** the second member is knot or a joining element.

7. System according to claim 6, **characterized in that** the second wall (22) is part of a metal plate (27) that constitutes one of the walls.

8. Cab for truck comprising a box-type system according to any of the previous claims.

9. Method for producing a box-type system, according to one of the previous claims from 1 to 7, comprising the following steps:
overlapping and joining one end of the first longitudinal wall and an end portion of the second box-type member;
overlapping and joining one end of the second longitudinal wall and the second end portion of the second box-type member, so as to form a first box-type structure defined by said first and second longitudinal walls;
joining together said first and second longitudinal walls along the longitudinal edges.

## Patentansprüche

1. Kastensystem für eine Fahrzeugkarosserie, wobei das Kastensystem umfasst:
ein erstes Kastenelement (1) mit zwei Längswänden (4, 5, 21, 22), die einen Querschnitt aufweisen, der eine Biegung oder eine Krümmung, die im Wesentlichen L-förmig ist, bildet, wobei das konkave Teil des Querschnittes von jeder der Längswände so angeordnet ist, dass es zu der anderen Längswand weist;
ein zweites Kastenelement, das mit jeder der Wände mittels der teilweisen Überlappung eines Endabschnittes davon (8, 9, 10, 11, 23, 24) und einem Ende der Wand verbunden ist,
**dadurch gekennzeichnet, dass**
das erste Kastenelement (1) ein oberes vorderes Querelement oder ein rückwärtiges oberes rückwärtiges Querelement der Fahrzeugkarosserie definiert und das zweite Kastenelement (2, 3, 23, 24) zwischen den Wänden und dem Dach der Fahrzeugkarosserie angeordnet ist, und dass das erste Kastenelement (1) so gekrümmt ist, dass es an das zweite Kastenelement ohne Bildung scharfer Ecken anliegt.

2. System nach Anspruch 1,
**dadurch gekennzeichnet, dass**
die Überlappungszone tangential zu der Krümmung des ersten Kastenelements (1) gemäß einer Schnittdraufsicht der Verbindung zwischen dem ersten und zweiten Element ist.

3. System nach einem der vorhergehenden Ansprüche,
**dadurch gekennzeichnet, dass**
die Verbindung durch Schweißen, Hartlöten, Schweißlöten oder Kleben erreicht wird.

4. System nach Anspruch 3,
**dadurch gekennzeichnet, dass**
die Verbindung durch Punktschweißen erreicht wird.

5. System nach einem der vorhergehenden Ansprüche,
**dadurch gekennzeichnet, dass**
die Längswände entlang der Längsränder bevorzugt mittels überlappender Längsklappen (12, 14, 13, 15, 30, 31, 32, 27) miteinander verbunden sind.

6. System nach einem der vorhergehenden Ansprüche,
**dadurch gekennzeichnet, dass**
das zweite Element ein Knoten oder ein Verbindungselement ist.

7. System nach Anspruch 6,
**dadurch gekennzeichnet, dass**
die zweite Wand (22) Teil einer Metallplatte (27) ist, die eine der Wände bildet.

8. Führerhaus für einen Lastwagen mit einem Kastensystem nach einem der vorhergehenden Ansprüche.

9. Verfahren zum Herstellen eines Kastensystems nach einem der vorhergehenden Ansprüche 1 bis 7, mit den folgenden Schritten:
Überlappen und Verbinden von einem Ende der ersten Längswand und einem Endabschnitt des zweiten Kastenelements;
Überlappen und Verbinden von einem Ende der zweiten Längswand und des zweiten Endabschnittes des zweiten Kastenelements, um so einen ersten Kastenaufbau zu bilden, der durch die erste und zweite Längswand definiert ist;
Verbinden der ersten und zweiten Längswand miteinander entlang der Längsränder.

## Revendications

1. Système de type boîte pour un corps de véhicule, ledit système de type boîte comprenant :
un premier élément de type boîte (1) comprenant deux parois longitudinales (4, 5, 21, 22) ayant une section transversale qui forme une flexion ou courbure essentiellement en forme de L, dans lequel la partie concave de la section transversale de chacune des parois latérales est agencée pour faire face à l'autre paroi longitudinale ;
un deuxième élément de type boîte assemblé à chacune desdites parois au moyen du chevauchement partiel de sa partie d'extrémité (8, 9, 10, 11, 23, 24) et d'une extrémité de ladite paroi,
**caractérisé en ce que** ledit premier élément de type boîte (1) définit un élément transversal avant supérieur ou un élément transversal arrière supérieur du corps de véhicule et ledit deuxième élément de type boîte (2, 3, 23, 24) est agencé entre les parois et le toit du corps de véhicule et **en ce que** ledit premier élément de type boîte (1) est incurvé de sorte qu'il s'assemble audit deuxième élément de type boîte sans former de coins saillants.

2. Système selon la revendication 1, **caractérisé en ce que** ladite zone de chevauchement est tangentielle à la courbe dudit premier élément de type boîte (1) selon une vue en plan en coupe transversale de l'assemblage entre les premier et deuxième éléments.

3. Système selon l'une quelconque des revendications précédentes, **caractérisé en ce que** l'assemblage est obtenu par soudage, brasage, soudobrasage ou collage.

4. Système selon la revendication 3, **caractérisé en ce que** l'assemblage est obtenu par soudage par points.

5. Système selon l'une quelconque des revendications précédentes, **caractérisé en ce que** lesdites parois longitudinales sont assemblées le long des bords longitudinaux, de préférence au moyen de rabats longitudinaux chevauchants (12, 14, 13, 15, 30, 31, 32, 27).

6. Système selon l'une quelconque des revendications précédentes, **caractérisé en ce que** le deuxième élément est un bouton ou un élément d'assemblage.

7. Système selon la revendication 6, **caractérisé en ce que** la deuxième paroi (22) fait partie d'une plaque métallique (27) qui constitue l'une des parois.

8. Cabine pour camion comprenant un système de type boîte selon l'une quelconque des revendications précédentes.

9. Procédé pour produire un système de type boîte selon l'une quelconque des revendications 1 à 7 précédentes, comprenant les étapes suivantes consistant à :
faire chevaucher et assembler une extrémité de la première paroi longitudinale et une partie d'extrémité du deuxième élément de type boîte ;
faire chevaucher et assembler une extrémité de la deuxième paroi longitudinale et la deuxième partie d'extrémité du deuxième élément de type boîte, afin de former une première structure de type boîte définie par lesdites première et deuxième parois longitudinales ;
assembler lesdites première et deuxième parois longitudinales le long des bords longitudinaux.
